(19) Europäisches Patentamt
European Patent Office
Office européen des brevets

(11) EP 2 434 431 A1

(12) EUROPEAN PATENT APPLICATION
published in accordance with Art. 153(4) EPC

(43) Date of publication:
28.03.2012 Bulletin 2012/13

(51) Int Cl.:
$G06K\ 9/00$ (2006.01)

(21) Application number: 10777364.0

(86) International application number:
PCT/CN2010/072867

(22) Date of filing: 18.05.2010

(87) International publication number:
WO 2010/133161 (25.11.2010 Gazette 2010/47)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 20.05.2009 CN 200910135298

(71) Applicant: Sony Corporation
Tokyo 108-0075 (JP)

(72) Inventors:
• ZHANG, Lun
Haidian District
Beijing 100190 (CN)
• WU, Weiguo
Haidian District
Beijing 100190 (CN)

(74) Representative: Turner, James Arthur
D Young & Co LLP
120 Holborn
London EC1N 2DY (GB)

(54) METHOD AND DEVICE FOR CLASSIFYING IMAGE

(57) A method and a device for classifying an image are provided. The method includes: extracting a set of features as a feature vector, wherein the extracting includes: for each feature of the feature vector, determining a plurality of first areas arranged along a first axis and a plurality of second areas arranged along a second axis intersecting with the first axis; calculating the first differ- ences between the sums of the pixels or the mean values of the plurality of first areas and the second differences between the sums of the pixels or the mean values of the plurality of second areas; and calculating the magni- tude of gradient and the direction of gradient based on the first differences and the second differences, so as to form each feature; and according to the extracted feature vector, classifying the image.

Fig. 1

**Description**

**Technical Field**

The present invention relates to classifying videos or images (determining whether objects are contained or not), i.e., detecting or recognizing objects in the videos or the images, and especially to a method of and an apparatus for generating a classifier for discriminating whether objects to be detected are contained in the videos or the images, and a method of and an apparatus for classifying images with the generated classifier.

**Background**

As widely spreading of applications such as video monitoring, artificial intelligence, computer vision or the like, there are increasing demands for techniques of detecting specific objects such as human, animal, vehicle or the like presenting in videos and images. Among methods of detecting objects in the videos or the images, there is a kind of methods where static image features are employed to create classifiers for discriminating whether objects or non-obj ects are contained in the videos or the images, thereby employing the classifiers to classifying the images, i.e., detecting objects in the images, whereas for the videos, the detecting is performed by regarding each frame as an image.
One of such techniques has been disclosed in Paul Viola and Michael Jones, "Robust Real-time Object Detection", Second International Workshop On Statistical And Computational Theories Of Vision-Modeling, Learning, Computing, And Sampling, Vancouver, Canada, July 13, 2001. In the technique of Paul Viola et al., differences between pixel value sums of rectangular blocks are extracted from images as features, features which are more suitable for discriminating object and non-objects are selected from the extracted features to form weak classifiers through the AdaBoost method, and the weak classifiers are merged to form a strong classifier. This kind of methods are suitable for detecting objects such as human face from images, and their robustness in detecting obj ects such as human is not high.

**Summary**

In view of the above deficiencies of the prior art, the present invention is intended to provide a method of and an apparatus for generating a classifier, and a method of and an apparatus for classifying images, to increase the robust in detecting objects in the image.
According to an embodiment of the present invention, a method of generating a classifier for discriminating object images from non-object images includes: extracting from each of a plurality of input images a set of features as a feature vector, wherein the extracting comprises: for each of the features in the feature vector, determining a plurality of first areas arranged along a direction of a first axis, and a plurality of second areas arranged along a direction of a second axis intersecting the first axis at an intersection; calculating a first difference of pixel value sums or mean values of the plurality of first areas, and a second difference of pixel value sums or mean values of the plurality of second areas; and calculating a gradient intensity and a gradient orientation based on the first difference and the second difference to form each of the features; and training the classifier according to the extracted feature vectors.
According to another embodiment of the present invention, an apparatus for generating a classifier for discriminating object images from non-object images is provided, wherein the apparatus extracts from each of a plurality of input images a set of features as a feature vector, and wherein the apparatus comprises: a determining unit which, for each of the features in the feature vector, determines a plurality of first areas arranged along a direction of a first axis, and a plurality of second areas arranged along a direction of a second axis intersecting the first axis at an intersection; a difference calculating unit which calculates a first difference of pixel value sums or mean values of the plurality of first areas, and a second difference of pixel value sums or mean values of the plurality of second areas; and a gradient calculating unit which calculates a gradient intensity and a gradient orientation based on the first difference and the second difference to form the each of the features; and a training unit for training the classifier according to the extracted feature vectors.
According to the above embodiments of the present invention, because the features including a gradient orientation and a gradient intensity are calculated based on pixels of areas arranged in two directions, the extracted features can reflect the distribution of object edges in respective image portions more truly. The classifiers generated based on such features can be used to detect objects such as human or animals, especially those with various postures, in images more robustly.
Further, in the above methods and apparatuses, respective areas may be rectangular, where respective first areas are adjoined, and respective second areas are also adjoined.
In the above methods and apparatuses, in case that the numbers of the first areas and of the second areas are two, the first areas are adjoined and the second areas are adjoined, the intersection of the first axis and the second axis locates in a connecting line for adjoining the first areas or within a predetermined range from a connecting point for adjoining the first areas, and locates in a connecting line for adjoining the second areas or within a predetermined range from a connecting point for adjoining the second areas.

In the above methods and apparatuses, in case that the numbers of the first areas and of the second areas are two, the first areas are separated apart and the second areas are separated apart, the intersection of the first axis and the second axis locates within a predetermined range from the middle point between respective center positions of the first areas, and locates within a predetermined range from the middle point between respective center positions of the second areas.

In the above methods and apparatuses, in case that the numbers of the first areas and of the second areas are three, the intersection of the first axis and the second axis locates respectively in the intermediate one of the first areas and in the intermediate one of the second areas.

In the above methods and apparatuses, the difference between the area arrangements on which at least two of the features are based comprises one or more of the followings: relative positional relation of the areas, shape of the areas, size of the areas and aspect ratio of the areas. This can rich the features in consideration, thereby facilitate to select features suitable for discriminating objects and non-objects.

In the above methods and apparatuses, the features of at least one dimension in a plurality of feature vectors are transformed, where the transformed features include a gradient orientation and a gradient intensity, and the transforming comprises transforming the gradient orientation into one, including the gradient orientation of the feature, of a plurality of predetermined intervals. With respect to each of the at least one dimension, a classifier including sub-classifiers corresponding to the predetermined intervals is generated, where for each of the predetermined intervals, a threshold for the corresponding sub-classifier is obtained based on the distribution of gradient intensity of features of the feature vectors, which are in the dimension and have the same interval as the predetermined interval.

According to another embodiment of the present invention, a method of classifying an image includes: Extracting from the image a set of features as a feature vector, wherein the extracting comprises: for each of the features in the feature vector, determining a plurality of first areas arranged along a direction of a first axis, and a plurality of second areas arranged along a direction of a second axis intersecting the first axis at an intersection; calculating a first difference of pixel value sums or mean values of the plurality of first areas, and a second difference of pixel value sums or mean values of the plurality of second areas; and calculating a gradient intensity and a gradient orientation based on the first difference and the second difference to form each of the features; and classifying the image according to the extracted feature vector.

According to another embodiment of the present invention, an apparatus for classifying an image includes: a feature extracting device for extracting from the image a set of features as a feature vector, comprising: a determining unit which, for each of the features in the feature vector, determines a plurality of first areas arranged along a direction of a first axis, and a plurality of second areas arranged along a direction of a second axis intersecting the first axis at an intersection; a difference calculating unit which calculates a first difference of pixel value sums or mean values of the plurality of first areas, and a second difference of pixel value sums or mean values of the plurality of second areas; and a gradient calculating unit which calculates a gradient intensity and a gradient orientation based on the first difference and the second difference to form the each of the features; and a classifying unit which classifies the image according to the extracted feature vector.

In the above methods and apparatuses, as described in the above, because the gradients of portions in the image can be calculated based on pixels of a plurality of areas, the extracted features can reflect the distribution of object edges in respective image portions more completely, and there is less affect imposed by the change in object posture. The classifiers generated based on such features can be used to detect objects such as human or animals, especially those with various postures, in images more robustly.

In the above methods and apparatuses, the areas may be rectangular, wherein the first areas are adjoined, and the second areas are adjoined too.

In the above methods and apparatuses, in case that the numbers of the first areas and of the second areas are two, the first areas are adjoined and the second areas are adjoined, the intersection of the first axis and the second axis locates in a connecting line for adjoining the first areas or within a predetermined range from a connecting point for adjoining the first areas, and locates in a connecting line for adjoining the second areas or within a predetermined range from a connecting point for adj oining the second areas.

In the above methods and apparatuses, in case that the numbers of the first areas and of the second areas are two, the first areas are separated apart and the second areas are separated apart, the intersection of the first axis and the second axis locates within a predetermined range from the middle point between respective center positions of the first areas, and locates within a predetermined range from the middle point between respective center positions of the second areas.

In the above methods and apparatuses, in case that the numbers of the first areas and of the second areas are three, the intersection of the first axis and the second axis locates respectively in the intermediate one of the first areas and in the intermediate one of the second areas.

Further, in the above methods and apparatuses, the difference between the area arrangements on which at least two of the features are based comprises one or more of the followings: relative positional relation of the areas, shape of the areas, size of the areas and aspect ratio of the areas. This can rich the features in consideration, thereby facilitate to select features suitable for discriminating objects and non-objects.

Further, in the above methods and apparatuses, the classifying of the image comprises: for the gradient orientation and gradient intensity of each of the features, determining one, including the gradient orientation of the feature, of a plurality of gradient orientation intervals, wherein each of the gradient orientation intervals has a corresponding threshold; comparing the gradient intensity of the feature with the corresponding threshold of the determined gradient orientation interval; and generating a classification result according to the comparison result.

## Brief Description of Drawings

The above and/or other aspects, features and/or advantages of the present invention will be easily appreciated in view of the following description by referring to the accompanying drawings. In the accompanying drawings, identical or corresponding technical features or components will be represented with identical or corresponding reference numbers. In the accompanying drawings, it is not necessary to present size and relative position of elements in scale.

Fig. 1 is a block diagram illustrating the structure of an apparatus for generating a classifier for discriminating object images and non-object images according to an embodiment of the present invention.

Fig. 2 is a schematic diagram illustrating examples of the area arrangements determined by the determination unit.

Fig. 3a illustrates an example of distribution of outline edges of an object (human body).

Figs. 3b and 3c are schematic diagrams respectively illustrating how to determine first areas and second areas in the portion illustrated in Fig. 3a based on the area arrangement illustrated in Figs. 2a and 2b.

Fig. 4a is a schematic diagram illustrating object outline edges included in portion 302 as illustrated in Fig. 3a.

Fig. 4b is a schematic diagram illustrating the gradient calculated by the gradient calculating unit from the first difference and the second difference calculated by the difference calculate unit based on the first areas and the second areas as illustrated in Figs. 3b and 3c.

Fig. 5 is a flow chart illustrating a method of generating a classifier for discriminating object images and non-object images according to an embodiment of the present invention.

Fig. 6 is a block diagram illustrating a structure of the training unit for generating a classifier for discriminating object images and non-object images according to a preferable embodiment of the present invention.

Fig. 7 is a flow chart illustrating a method of generating a classifier for discriminating object images and non-object images according to a preferable embodiment of the present invention.

Fig. 8 is a block diagram illustrating the structure of an apparatus for classifying an image according to an embodiment of the present invention.

Fig. 9 is a flow chart illustrating a method of detecting an object in an image according to an embodiment of the present invention.

Fig. 10 is a block diagram illustrating a structure of the classifying unit according to a preferable embodiment of the present invention.

Fig. 11 is a flow chart illustrating a method of classifying according to a preferable embodiment of the present invention.

Fig. 12 is a block diagram illustrating the exemplary structure of a computer for implementing the embodiments of the present invention.

## Detailed Description

The embodiments of the present invention are below described by referring to the drawings. It is to be noted that, for purpose of clarity, representations and descriptions about those components and processes known by those skilled in the art but unrelated to the present invention are omitted in the drawings and the description.

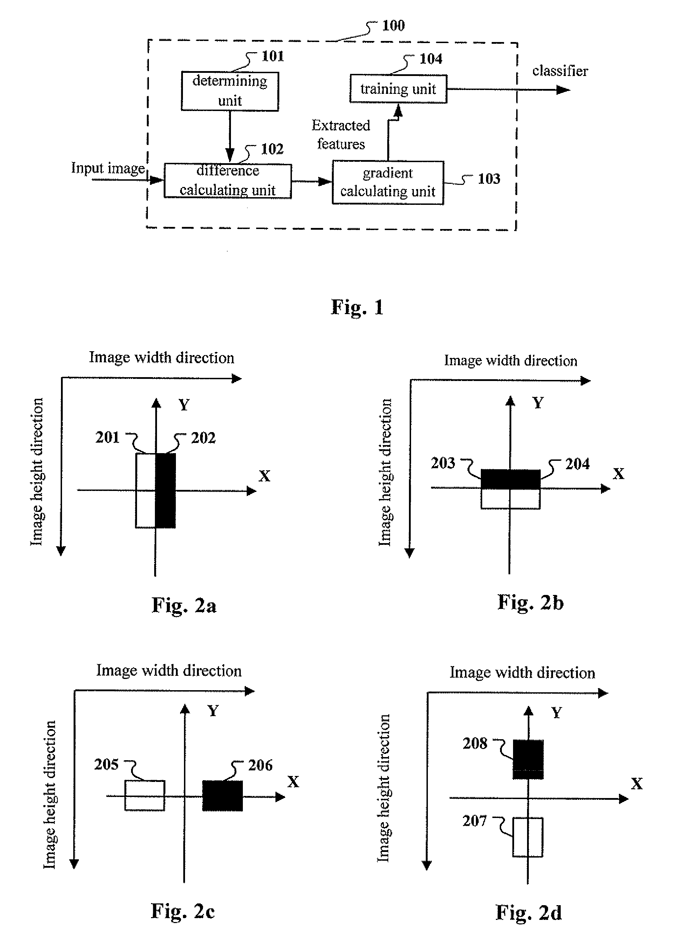

Fig. 1 is a block diagram illustrating the structure of an apparatus 100 for generating a classifier for discriminating object images and non-object images according to an embodiment of the present invention.

As illustrated in Fig. 1, the apparatus 100 includes a determining unit 101, a difference calculating unit 102, a gradient calculating unit 103 and a training unit 104.

In the technique of employing static image features to create a classifier, obj ect images and non-object images are collected, features are extracted from the collected object images and non-object images, and the extracted features are filtered and merged by using filtering methods such as AdaBoost to obtain a classifier for discriminating object images and non-object images. A method of collecting and preparing such object images and non-obj ect images has been disclosed in patent application WO 2008/151470, Ding et al., " A Robust Human Face Detecting Method In Complicated Background Image " (see page 2 to page 3 of the description). The object images and the non-object images as collected and prepared may serve as input images to the apparatus 100. The apparatus 100 extracts a group of features from each of a plurality of input images as a feature vector.

For each of the features in the feature vector, the determining unit 101 determines a plurality of first areas arranged along the direction of a first axis, and a plurality of second areas arranged along the direction of a second axis intersecting the first axis at an intersection (for example, in a right angle or a non-right angle).

The features to be extracted are usually based on pixels in the input image. The determining unit 101 is adapted to determine the pixel in the input image which each feature to the extracted is based on. The determining unit 101 may determine the pixels in the input image to be based on according to a predetermine area arrangement.

The arrangement of the first areas and the second areas may be various. In an example, the weighted mean position of positions of pixels in the plurality of first areas and the weighted mean position of positions of pixels in the plurality of second areas fall within a predetermined range from the intersection of the first axis and the second axis. Specifically, by taking first areas as an example, it is possible to represent positions of pixels in the first areas as ($x_{ij}$, $y_{ij}$), wherein $x_{ij}$ represents the coordinate of the $j$-th pixel of the $i$-th first area on the first axis (i.e., X-axis), and $y_{ij}$ represents the coordinate of the $j$-th pixel of the $i$-th first area on the second axis (i.e., Y-axis). The weighted mean position ($xa, ya$) of positions of pixels in the first areas may be defined in the following:

$$xa = \sum_{i}^{N} \sum_{j}^{M_i} x_{ij} \times w_i \ , \ ya = \sum_{i}^{N} \sum_{j}^{M_i} y_{ij} \times w_i$$

wherein $N$ is the number of the first areas, $M_i$ is the number of pixels in the $i$-th first area, $w_i$ is the weight of the $i$-th first area, and $\sum_{i}^{N} w_i = 1$.

Further or alternatively, in the above example, the weights of all the first areas may be identical, or may be at least in part different. In case of different weights, it is possible to allocate smaller weights to first areas including more pixels, and allocate larger weights to first areas including less pixels.

Although the description has been provided by taking the first areas as an example in the above, the above description is also applicable to the second areas.

In another example, the areas may be rectangular, wherein the first areas are adjoined, and the second areas are adjoined too.

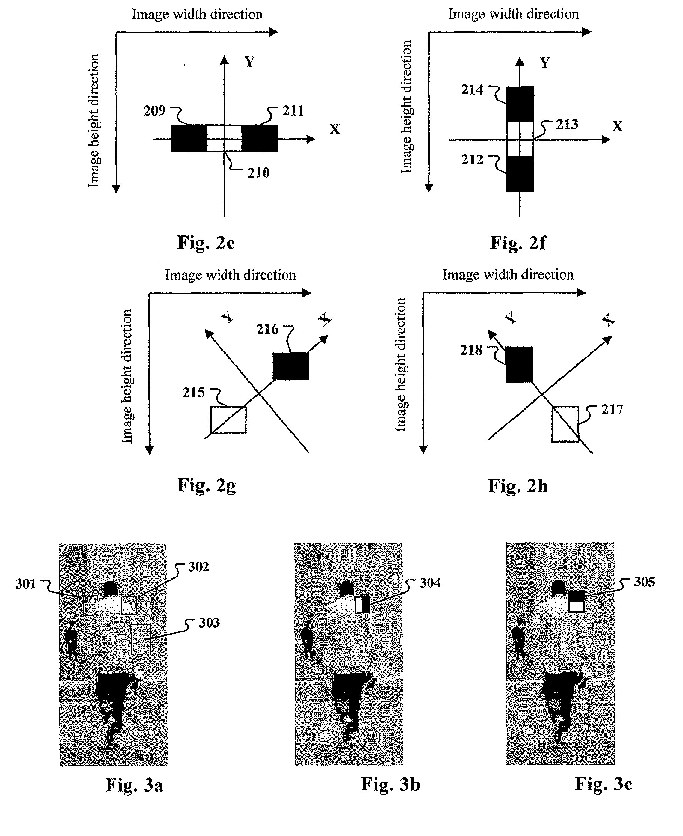

Fig. 2 is a schematic diagram illustrating examples of the area arrangements determined by the determining unit 101. In Fig. 2, X-axis represents the first axis, Y-axis represents the second axis, and white color and black color in rectangular blocks are only for discriminating purpose. Although the first axis and the second axis in Fig. 2 are illustrated as orthogonal to each other, the first axis and the second axis may also intersect with each other in a non-right angle.

According to an area arrangement, the numbers of the first areas and of the second areas are two, the first areas are adjoined and the second areas are adjoined. According to this arrangement, the intersection of the first axis and the second axis locates in a connecting line for adjoining the first areas or within a predetermined range from a connecting point (for example, when vertex points of rectangular areas are adjoined) for adjoining the first areas (for example, substantially coinciding with each other), and locates in a connecting line for adjoining the second areas or within a predetermined range from a connecting point for adjoining the second areas.

Fig. 2a and Fig. 2b illustrate an example of such area arrangement. Specifically, Fig. 2a illustrates an arrangement of first areas in the direction of the first axis, where each of a white rectangular block 201 and a black rectangular block 202 represents a first area and they are adjoined on a connecting line, whereas the intersection of the first axis and the second axis locates on the connecting line. Fig. 2b illustrates an arrangement of second areas in the direction of the second axis, where each of a white rectangular block 203 and a black rectangular block 204 represents a second area and they are adj oined on a connecting line, whereas the intersection of the first axis and the second axis locates on the connecting line. Although arrangements of areas in the directions of the first axis and the second axis are respectively illustrated in Fig. 2a and Fig. 2b, what is actually reflected is an area arrangement when Fig. 2a and Fig. 2b are merged, i.e., the first axis and the second axis of Fig. 2a are respectively identical to the first axis and the second axis of Fig. 2b. Alternatively, the rectangular blocks 201 and 202 as well as rectangular blocks 203 and 204 may be adjoined with each other via respective vertex points.

According to another area arrangement, the numbers of the first areas and of the second areas are two, the first areas are separated apart and the second areas are separated apart. According to this arrangement, the intersection of the first axis and the second axis locates within a predetermined range from the middle point between respective center positions of the first areas, and locates within a predetermined range from the middle point between respective center positions of the second areas.

Fig. 2c and Fig. 2d illustrate an example of such area arrangement. Fig. 2c illustrates an arrangement of first areas in the direction of the first axis, where each of a white rectangular block 205 and a black rectangular block 206 represents a first area and they are separated apart, whereas the intersection of the first axis and the second axis locates within a predetermined range from the middle point between respective center positions of the white rectangular block 205 and the black rectangular block 206. Fig. 2d illustrates an arrangement of second areas in the direction of the second axis, where each of a white rectangular block 207 and a black rectangular block 208 represents a second area and they are separated apart, whereas the intersection of the first axis and the second axis locates within a predetermined range from the middle point between respective center positions of the white rectangular block 207 and the black rectangular block 208. Although arrangements of areas in the directions of the first axis and the second axis are respectively illustrated in Fig. 2c and Fig. 2d, what is actually reflected is an area arrangement when Fig. 2c and Fig. 2d are merged, i.e., the first axis and the second axis of Fig. 2c are respectively identical to the first axis and the second axis of Fig. 2d.

Fig. 2g and Fig. 2h illustrate another example of such area arrangement, where rectangular blocks are against to each other at respective vertex points. Fig. 2g illustrates an arrangement of first areas in the direction of the first axis, where each of a white rectangular block 215 and a black rectangular block 216 represents a first area and they are separated apart, whereas the intersection of the first axis and the second axis locates within a predetermined range from the middle point between respective center positions of the white rectangular block 215 and the black rectangular block 216. Fig. 2h illustrates an arrangement of second areas in the direction of the second axis, where each of a white rectangular block 217 and a black rectangular block 218 represents a second area and they are separated apart, whereas the intersection of the first axis and the second axis locates within a predetermined range from the middle point between respective center positions of the white rectangular block 217 and the black rectangular block 218. Although arrangements of areas in the directions of the first axis and the second axis are respectively illustrated in Fig. 2g and Fig. 2h, what is actually reflected is an area arrangement when Fig. 2g and Fig. 2h are merged, i.e., the first axis and the second axis of Fig. 2g are respectively identical to the first axis and the second axis of Fig. 2h.

According to another area arrangement, the numbers of the first areas and of the second areas are three. According to this arrangement, the intersection of the first axis and the second axis locates respectively in the intermediate one of the first areas and in the intermediate one of the second areas.

Fig. 2e and Fig. 2f illustrate an example of such area arrangement. Fig. 2e illustrates an arrangement of first areas in the direction of the first axis, where each of a white rectangular block 210 and black rectangular blocks 209, 211 represents a first area and the intersection of the first axis and the second axis locates in the intermediate white rectangular block 210. Fig. 2f illustrates an arrangement of second areas in the direction of the second axis, where each of a white rectangular block 213 and black rectangular blocks 212, 214 represents a second area and the intersection of the first axis and the second axis locates in the intermediate white rectangular block 213. Although arrangements of areas in the directions of the first axis and the second axis are respectively illustrated in Fig. 2e and Fig. 2f, what is actually reflected is an area arrangement when Fig. 2e and Fig. 2f are merged, i.e., the first axis and the second axis of Fig. 2e are respectively identical to the first axis and the second axis of Fig. 2f. Alternatively, the rectangular blocks 209, 210 and 211 may be separated apart, instead of adjoined, and the rectangular blocks 212, 213 and 214 may be separated apart, instead of adjoined.

It should be noted that, the shape of first areas and second areas is not limited to rectangular, and it may be other shapes such as polygon, triangle, circle, ring, and irregular shapes. The shape of first areas and second areas may also be different, and in the feature area for the same feature, the shape of different first / second areas may also be different.

In addition, in case of rectangular shape, sides of different areas of first areas may be parallel to each other, or may be rotated by an angle relative to each other. Also, in case of rectangular shape, sides of different areas of second areas may be parallel to each other, or may be rotated by an angle relative to each other. In case of rectangular shape, the adjoining of rectangular areas comprises the cases where the rectangular area are adjoined via respective sides (i.e., the intersection of the first axis and the second axis locates on these sides), and the cases where the rectangular areas are adjoined via vertex points of respective corners (i.e., the intersection of the first axis and the second axis locates at these vertex points).

It should also be noted that the number of first areas arranged in the direction of the first axis and the number of second areas arranged in the direction of the second axis are not limited to the numbers as illustrated in Fig. 2, and the number of first areas is not necessarily identical to the number of second areas, as long as the weighted mean position of positions of pixels in the first areas and the weighted mean position of positions of pixels in the second areas fall within a predetermined range from the intersection of the first axis and the second axis. Preferably, the number of first areas and the number of second areas are not greater than 3.

It should also be noted that in the feature area for the same feature, the relative position relation of first areas and the relative position relation of second areas may be arbitrary. For example, first areas arranged in the direction of the first axis may be adjoined, separated, partly adjoined, and partly separated, second areas arranged in the direction of the second axis may be adjoined, separated, partly adjoined, and partly separated, as long as the weighted mean position of positions of pixels in the first areas and the weighted mean position of positions of pixels in the second areas fall within a predetermined range from the intersection of the first axis and the second axis.

In the collected object images, outline edges of objects present characteristics distinct from that of non-objects. The outline edges of obj ects in the obj ect images may have various distributions. To be able to extract features enough for reflecting the outline edges of objects, the determining unit 101 may determine first areas and second areas in portions with different sizes and at different positions in the input image, to obtain features of edge outlines in the portions.

Fig. 3a illustrates an example of distribution of outline edges of an object (human body). As illustrated in Fig. 3a, in the input image, outline edges of human body exist in respective portions with different sizes and at different positions, such as portions 301, 302 and 303.

Figs. 3b and 3c are schematic diagrams respectively illustrating how to determine first areas and second areas in the portion 302 illustrated in Fig. 3a based on the area arrangement illustrated in Figs. 2a and 2b. In Fig. 3b, reference sign 304 indicates the arrangement of first areas. In Fig. 3c, reference sign 305 indicates the arrangement of second areas.

In an embodiment, the determining unit 101 may determine first areas and second areas at different positions in the input image according to an area arrangement. New area arrangements are then obtained by changing area size and/or area aspect ratio in this area arrangement, and first areas and second areas are determined at different positions in the input image based on the new area arrangements. This process is repeated until all the possible area sizes or area aspect ratios have been attempted for this area arrangement.

In addition or alternatively, in the above embodiments, the determining unit 101 may obtain new area arrangements by changing relative position relation of areas in the area arrangement.

In addition or alternatively, in the above embodiments, the determining unit 101 may obtain new area arrangements by changing the number of areas in the area arrangement.

In addition or alternatively, in the above embodiments, the determining unit 101 may obtain new area arrangements by changing the shape of areas in the area arrangement.

First areas and second areas determined by the determining unit 101 based on one position of an area arrangement in the input image determine one feature to be extracted. In brief, area arrangements of feature areas on which at least two features in a feature vector are based are different. For example, the difference between the area arrangements on which at least two of the features are based comprises one or more of the followings: relative positional relation of the areas, shape of the areas, size of the areas and aspect ratio of the areas.

Returning to Fig. 1, for the first areas and the second areas determined by the determining unit 101 according to each position of each area arrangement in the input image, the difference calculating unit 102 calculates a first difference dx between pixel value sums or mean values (grey scale) of the first areas, and a second difference dy between pixel value sums or mean values of the second areas.

For example, with respect to the area arrangement illustrated in Figs. 2a and 2b, it is possible to calculate the first difference and the second difference through the following equations:

The first difference = pixel value sum or mean value of the rectangular block 202 - pixel value sum or mean value of the rectangular block 201,

The second difference = pixel value sum or mean value of the rectangular block 202 - pixel value sum or mean value of the rectangular block 201.

For another example, with respect to the area arrangement illustrated in Figs. 2c and 2d, it is possible to calculate the first difference and the second difference through the following equations:

The first difference = pixel value sum or mean value of the rectangular block 206 - pixel value sum or mean value of the rectangular block 205,

The second difference = pixel value sum or mean value of the rectangular block 208 - pixel value sum or mean value of the rectangular block 207.

For another example, with respect to the area arrangement illustrated in Figs. 2e and 2f, it is possible to calculate the first difference and the second difference through the following equations:

The first difference = pixel value sum or mean value of the rectangular block 209 + pixel value sum or mean value of the rectangular block 211 - pixel value sum or mean value of the rectangular block 210 $\times$ 2,

The second difference = pixel value sum or mean value of the rectangular block 212 + pixel value sum or mean value of the rectangular block 214 - pixel value sum or mean value of the rectangular block 213 $\times$ 2.

For another example, with respect to the area arrangement illustrated in Figs. 2g and 2h, it is possible to calculate the first difference and the second difference through the following equations:

The first difference = pixel value sum or mean value of the rectangular block 216 - pixel value sum or mean value of the rectangular block 215,

The second difference = pixel value sum or mean value of the rectangular block 218 - pixel value sum or mean value of the rectangular block 217.

The difference between pixel value sums or mean values (grey scale) of areas on an axis is calculated for purpose of obtaining information reflecting the change in pixel grey scale in the direction of the corresponding axis. With respect to different area arrangements, there are corresponding methods of calculating the first difference and the second difference, as long as they are able to reflect this change.

Returning to Fig. 1, the gradient calculating unit 103 calculates a gradient intensity and a gradient orientation based on the first difference and the second difference calculated by the difference calculating unit to form a feature to be extracted.

It is possible to calculate the gradient direction and the gradient intensity according to the following equations:

$$\text{Gradient orientation} = arctg(\frac{dx}{dy}) \qquad (1),$$

$$\text{Gradient intensity} = \sqrt{dx^2 + dy^2} \qquad (2).$$

According to the above equation (1), the gradient orientation has an angle range from 0 to 180 degrees. In an alternative embodiment, it is possible to calculate the gradient orientation according to the following equation:

$$\text{Gradient orientation} = atan2\left(\frac{dx}{dy}\right) = arg\left(\frac{dx}{dy}\right) - \pi \quad (1').$$

According to the above equation (1'), the gradient orientation has an angle range from 0 to 360 degrees.

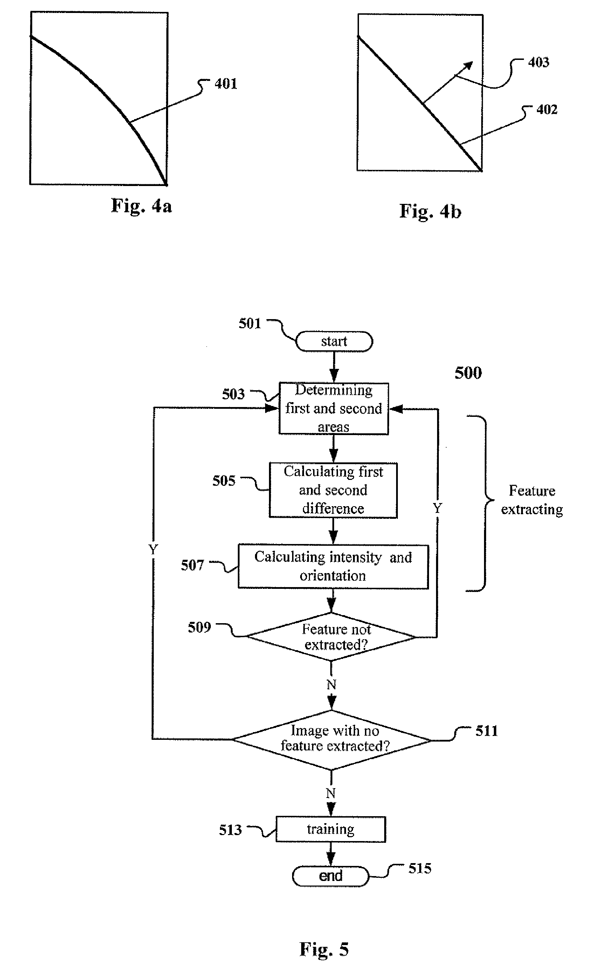

Fig. 4a is a schematic diagram illustrating object outline edges included in portion 302 as illustrated in Fig. 3a. As illustrated in Figs. 4a, an edge 401 schematically represents an edge outline included in the portion 302.

Fig. 4b is a schematic diagram illustrating the gradient orientation calculated by the gradient calculating unit 103 from the first difference and the second difference calculated by the difference calculating unit 102 based on the first areas and the second areas as illustrated in Figs. 3b and 3c. In Figs. 4b, a normal line 403 to a diagonal line 402 represents the calculated gradient orientation.

Because the features including a gradient orientation and a gradient intensity is calculated based on pixels of areas arranged in two directions and co-located, the extracted features can reflect the distribution of object edges in respective image portions more truly. Accordingly, the classifiers generated based on such features can be used to detect objects such as human or animals, especially those with various postures, in images more robustly.

All the features extracted for each input image form one feature vector.

Returning to Fig. 1, the training unit 104 trains a classifier based on the extracted feature vectors.

It is possible to train the classifier through a machine learning method such as SVM (support vector machine) based on the feature vectors obtained in the above embodiments, by adopting the histogram of oriented gradients. Such methods of training classifiers based on gradient features are described in literatures such as Dalal et al., "Histograms of Oriented Gradients for Human Detection", Proc. of IEEE Computer Society Conference on Computer Vision and Pattern Recognition,2005: 886 - 893, and Triggs et al., "Human Detection Using Oriented Histograms of Flow and Appearance", Proc. European Conference on Computer Vision, 2006.

Fig. 5 is a flow chart illustrating a method 500 of generating a classifier for discriminating object images and non-obj ect images according to an embodiment of the present invention.

As illustrated in Fig. 5, the method 500 starts from step 501. Steps 503, 505 and 507 involve extracting a group of candidate features as a feature vector from a present input image. At step 503, for each of the features in the feature vector, a plurality of first areas arranged along the direction of a first axis, and a plurality of second areas arranged along the direction of a second axis intersecting the first axis at an intersection (for example, in a right angle or a non-right angle) are determined.

As described by referring to Fig. 1, a method disclosed in patent application WO 2008 / 151470, Ding et al., " A Robust Robust Human Face Detecting Method In Complicated Background Image " may be used to collect and prepare input images including object images and non-object images (see page 2 to page 3 of the description).

The arrangement of the first areas and the second area may be that described in connection with the embodiment of Fig. 1 in the above.

At step 503, it is possible to determine first areas and second areas in portions with different sizes and at different positions in the input image, to obtain features of edge outlines in the portions.

In a modification of the method 500, at step 503, it is possible to determine first areas and second areas at different positions in the input image according to an area arrangement. New area arrangements are then obtained by changing area size and/or area aspect ratio in this area arrangement, and first areas and second areas are determined at different positions in the input image based on the new area arrangements. This process is repeated until all the possible area sizes or area aspect ratios have been attempted for this area arrangement.

In addition or alternatively, in the above embodiments, at step 503, it is possible to obtain new area arrangements by changing relative position relation of areas in the area arrangement.

In addition or alternatively, in the above embodiments, at step 503, it is possible to obtain new area arrangements by changing the number of areas in the area arrangement.

In addition or alternatively, in the above embodiments, at step 503, it is possible to obtain new area arrangements by changing the shape of areas in the area arrangement.

At step 503, first areas and second areas determined based on one position of an area arrangement in the input image determine one feature to be extracted. In brief, area arrangements of feature areas on which at least two features in a feature vector are based are different. For example, the difference between the area arrangements on which at least two of the features are based comprises one or more of the followings: relative positional relation of the areas, shape of the areas, size of the areas and aspect ratio of the areas.

At step 505, a first difference of pixel value sums or mean values of the plurality of first areas, and a second difference of pixel value sums or mean values of the plurality of second areas are calculated. It is possible to calculate the first difference and the second difference through the method described in connection with the embodiment of Fig. 1 in the above.

Then at step 507, a gradient intensity and a gradient orientation are calculated based on the first difference and the second difference as calculated to form a feature to be extracted. It is possible to calculate the gradient orientation and the gradient intensity according to equations (1) (or (1')) and (2).

At step 509 then, it is determined whether there is any feature not extracted for the present input image. If there is a candidate feature not extracted, the process returns to step 503 to extract the next candidate feature; if otherwise, the process proceeds to step 511.

At step 511, it is determined whether there is any input image with feature vectors not extracted. If there is an input image with feature vectors not extracted, the process returns to step 503 to extract the feature vectors of the next input image; if otherwise, the process proceeds to step 513.

In the method 500, because the features including a gradient orientation and a gradient intensity are calculated based on pixels of areas arranged in two directions and co-located, the extracted features can reflect the distribution of object edges in respective image portions more truly. Accordingly, the classifiers generated based on such features can be used to detect objects such as human or animals, especially those with various postures, in images more robustly.

All the features extracted for each input image form one feature vector.

At step 513, the classifier is trained according to the extracted feature vectors.

It is possible to train the classifier through a machine learning method such as SVM (support vector machine) based on the feature vectors obtained in the above embodiments, by adopting the histogram of oriented gradients. Such methods of training classifiers based on gradient features are described in literatures such as Dalal et al., "Histograms of Oriented Gradients for Human Detection", Proc. of IEEE Computer Society Conference on Computer Vision and Pattern Recognition,2005: 886 - 893, and Triggs et al., "Human Detection Using Oriented Histograms of Flow and Appearance", Proc. European Conference on Computer Vision, 2006.

The method 500 ends at step 515.

As will be described in the below, it is also possible to train the classifier based on gradient features obtain in the above embodiments without adopting the histogram of oriented gradients.

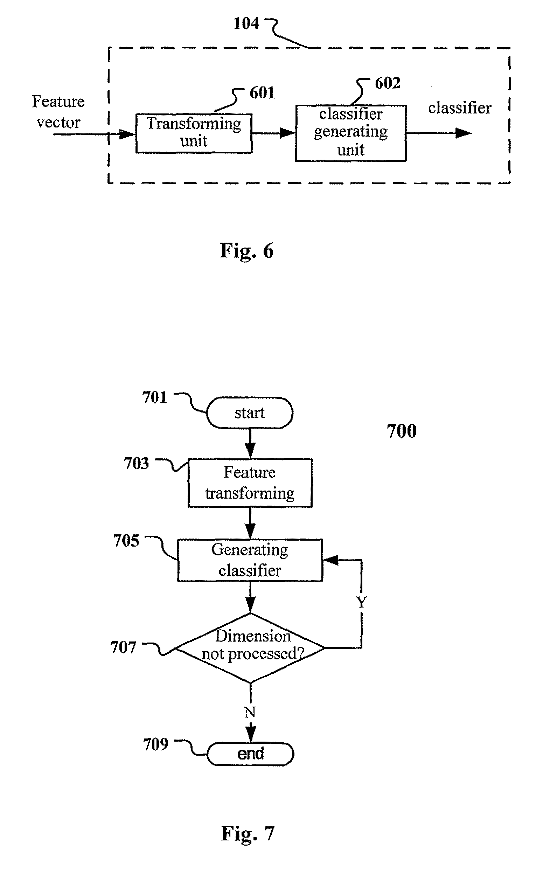

Fig. 6 is a block diagram illustrating a structure of the training unit 104 for generating a classifier for discriminating object images and non-object images according to a preferable embodiment of the present invention.

As illustrated in Fig. 6, the training unit 104 includes a transforming unit 601 and a classifier generating unit 602.

The transforming unit 601 transforms the features of at least one dimension in a plurality of feature vectors, where the transformed features include a gradient orientation and a gradient intensity. For example, the feature vectors may be that generated in the embodiments described with reference to Fig. 1 and Fig. 5 in the above. The transforming performed by the transforming unit 601 comprises transforming the gradient orientation into one of a plurality of predetermined intervals which the gradient orientation falls within.

For example, the gradient orientation has an angle range from 0 to 180 degrees (i.e., angle range covered by the plurality of predetermined intervals). It is possible to divide this range into a number of predetermined intervals (also called as gradient orientation intervals), for example, into three intervals from 0 to 60 degrees, from 60 to 120 degrees, and from 120 to 180 degrees. Of course, it is also possible to perform other divisions. The angle range of the gradient orientation may also be 360 degrees. Preferably, the number of the predetermined intervals ranges from 3 to 15. The larger number of predetermined intervals can make the angle division finer, and is more advantageous to achieve stronger classification ability (lower error rate). However, the larger number of predetermined intervals is prone to cause an over-learning phenomenon in detecting, making the classification effect deteriorative. The smaller number of predetermined intervals can make the angle division coarser, and achieve weaker classification ability. However, the smaller number of predetermined intervals can result in lower sensitivity to changes in angle, and is more advantageous to improve the robustness in case of posture change. It is possible to achieve a trade-off between the classification ability and the posture robustness according to the demand of specific implementations, so as to determine the number of predetermined intervals.

The transforming unit 601 transforms the gradient orientation of a feature into a corresponding interval based on the interval which the gradient orientation falls within.

It is assumed that there are N predetermined intervals, and feature vectors are represented as $<f_1,..., f_M>$, where $f_i$ includes a gradient intensity $I_i$ and a gradient orientation $O_i$. For a feature $f_i$ to be transformed, the transformed feature is represented as $f_i$, where $f_i$ includes the gradient intensity $I_i$ and an interval $R_i$.

It is possible to generate a classifier corresponding to a dimension based on features $f_i$ in the dimension of the feature vectors. The classifier may be represented as $h_i(I, O)$, where I represents the gradient intensity, O represents the gradient orientation. The classifier includes N sub-classifiers $h_{ij}(I)$, $0<j<N+1$, corresponding to N predetermined intervals $K_j$ respectively, for performing classification on features having the gradient orientations falling within the corresponding predetermined intervals. Each sub-classifier $h_{ij}(I)$ has a corresponding threshold $\theta_{ij}$, and classes $a_{ij}$ and $b_{ij}$

(object, non-object) determined according to the threshold. The processing of $h_{ij}(I)$ may be represented as: if $I < \theta_{ij}$, then $h_{ij}(I) = a_{ij}$; otherwise $h_{ij}(I) = b_{ij}$. For each sub-classifier $h_{ij}(I)$, it is possible to obtain the threshold $\theta_{ij}$ by learning based on the distribution of gradient intensity of features having the same interval $R_i$ as the interval $K_j$ in the features $f_i$ of the transformed feature vectors, and thus obtain the classes $a_{ij}$ and $b_{ij}$.

With respect to each of the at least one dimension, the classifier generating unit 602 generates a classifier including sub-classifiers corresponding to the predetermined intervals respectively, where for each of the predetermined intervals, a threshold for the corresponding sub-classifier is obtained based on the distribution of gradient intensity of features of the feature vectors, which are in the dimension and have the same interval as the predetermined interval, and the class determined based on the threshold is obtained. Alternatively, it is also possible to obtain a measure on the reliability of the determined class.

In a simple implementation, it is possible to performing the transformation and the classifier generation only for one dimension, and the generated classifier functions as a classifier for distinguishing object images and non-object images.

Preferably, the above at least one dimension may include at least two or all the dimensions of the feature vectors. In this case, it is possible to generate a classifier corresponding to each dimension respectively, and obtain a final classifier based on the generated classifiers.

It is possible to combine the classifiers corresponding to the dimensions into the final classifier through a known method. For example, the AdaBoost method is one for classifying, and can be used to merge the classifiers generate for the respective dimensions together to form a new strong classifier.

In the AdaBoost method, a weight is set for each sample, and the classifiers are combined through an iterative method. In each iteration, when some samples are correctly classified by the classifiers, the weights for these samples are reduced; in case of wrongly classifying, the weights for these samples are increased, so that the learning algorithm can focus on more difficult training samples in the following learning, and finally obtain a classifier with perfect recognizing accuracy.

Such a technique for selecting and merging a plurality of classifiers to form a final classifier has been disclosed in Paul Viola and Michael Jones, " Robust Real - time Object Detection ", Second International Workshop On Statistical And Computational Theories Of Vision - Modeling, Learning, Computing, And Sampling, Vancouver, Canada, July 13, 2001.

In a preferable embodiment, one of the predetermined intervals represents weak gradients. In this case, if the gradient intensity of a feature is smaller than a predetermined threshold, the transforming unit 601 transforms the gradient orientation into the interval representing weak gradients. Regardless of the gradient intensity, the weak sub-classifier corresponding to an interval representing weak gradients classifies the corresponding features into non-obj ect.

Fig. 7 is a flow chart illustrating a method 700 of generating a classifier for discriminating obj ect images and non-obj ect images according to a preferable embodiment of the present invention.

As illustrated in Fig. 7, the method 700 starts from step 701. At step 703, the features of at least one dimension in a plurality of feature vectors are transformed, where the transformed features include a gradient orientation and a gradient intensity. For example, the feature vectors may be that generated in the embodiments described with reference to Fig. 1 and Fig. 5 in the above. The transforming being performed comprises transforming the gradient orientation into one of a plurality of predetermined intervals which the gradient orientation falls within.

At step 705, with respect to the present dimension of the transformed feature vectors, a classifier including sub-classifiers corresponding to the predetermined intervals respectively is generated, where for each of the predetermined intervals, a threshold for the corresponding sub-classifier is obtained based on the distribution of gradient intensity of features of the feature vectors, which are in the present dimension and have the same interval as the predetermined interval, and the class determined based on the threshold is obtained. Alternatively, it is also possible to obtain a measure on the reliability of the determined class.

At step 707, it is determined whether there is any dimension with no classifier being generated. If any, the method returns to step 705 to generate the classifier for the next dimension; otherwise the method ends at step 709.

In a simple implementation, it is possible to performing the transformation and the classifier generation only for one dimension, and the generated classifier functions as a classifier for distinguishing object images and non-object images.

Preferably, the above at least one dimension may include at least two or all the dimensions of the feature vectors. In this case, it is possible to generate a classifier corresponding to each dimension respectively, and obtain a final classifier based on the generated classifiers.

It is possible to combine the classifiers corresponding to the dimensions into the final classifier through a known method. For example, the AdaBoost method proposed by Paul Viola et al. may be used to form a final classifier based on the generate classifiers.

In a preferable embodiment, one of the predetermined intervals represents weak gradients. In this case, at step 703, if the gradient intensity of a feature is smaller than a predetermined threshold, the gradient orientation is transformed into the interval representing weak gradients. Regardless of the gradient intensity, the weak sub-classifier corresponding to an interval representing weak gradients classifies the corresponding features into non-object.

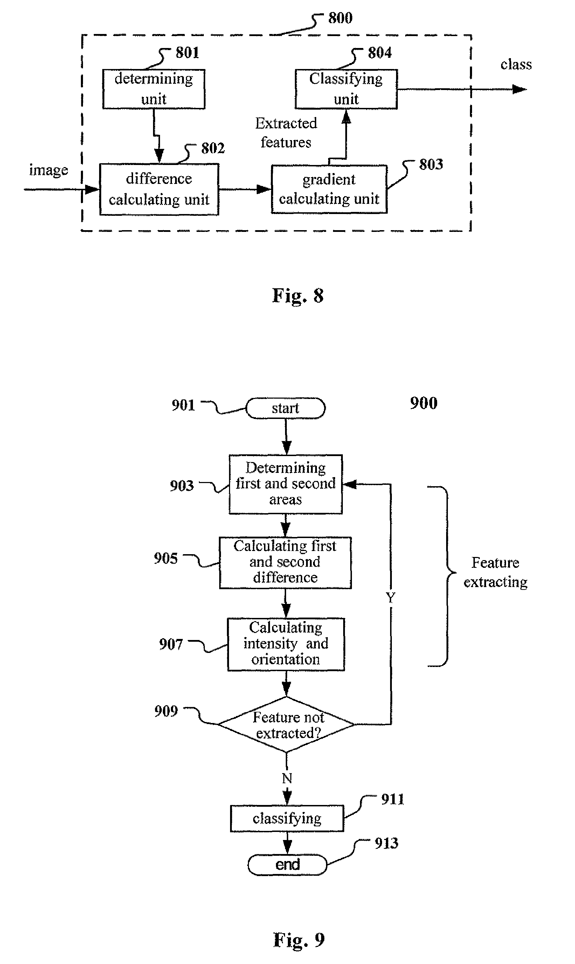

Fig. 8 is a block diagram illustrating the structure of an apparatus 800 for classifying an image according to an embodiment of the present invention.

As illustrated in Fig. 8, the apparatus 800 includes a determining unit 801, a difference calculating unit 802, a gradient calculating unit 803 and a classifying unit 804.

The images input to the apparatus 800 may be those of a predetermined size obtained from the images to be processed through a scanning window. The images may be obtained through a method disclosed in patent application WO 2008/151470, Ding et al., " A Robust Human Face Detecting Method In Complicated Background Image " (see page 5 of the description).

In this embodiment, the feature vector to be extracted is that the classifier(s) used by the classifying unit 804 is based on.

For each of the features in the feature vector, the determining unit 801 determines a plurality of first areas arranged along the direction of a first axis, and a plurality of second areas arranged along the direction of a second axis intersecting the first axis at an intersection (for example, in a right angle or a non-right angle).

The area arrangements of the first areas and the second areas which the determining unit 801 is based on may be that described in connection with the determining unit 101 in the above.

For the first areas and the second areas determined by the determining unit 801 according to each position of each area arrangement in the input image, the difference calculating unit 802 calculates a first difference dx between pixel value sums or mean values (grey scale) of the first areas, and a second difference dy between pixel value sums or mean values of the second areas. It is possible to calculate the gradient orientation and the gradient intensity according to equations (1) (or (1')) and (2).

The gradient calculating unit 803 calculates a gradient intensity and a gradient orientation based on the first difference and the second difference calculated by the difference calculating unit 802 to form a feature to be extracted. It is possible to calculate the gradient intensity and the gradient orientation by using the method described in connection with the gradient calculating unit 103 in the above.

All the features extracted for the input image form one feature vector. The classifying unit 804 classifies the input image according to the extracted feature vector. The classifier adopted by the classifying unit 804 may be that generated in the above embodiments, for example, the classifier generated by adopting the histogram of oriented gradients, or the classifier generate based on the gradient orientation intervals.

Fig. 9 is a flow chart illustrating a method 900 of classifying an image according to an embodiment of the present invention.

As illustrated in Fig. 9, the method 900 starts from step 901. Steps 903, 905 and 907 involve extracting a group of features as a feature vector from a present input image. The feature vector to be extracted is that the classifier(s) being used is based on. The input image may be those of a predetermined size obtained from the images to be processed through a scanning window. The images may be obtained through a method disclosed in patent application WO 2008/151470, Ding et al., "A Robust Human Face Detecting Method In Complicated Background Image" (see page 5 of the description).

At step 903, for each of the features in the feature vector, a plurality of first areas arranged along the direction of a first axis, and a plurality of second areas arranged along the direction of a second axis intersecting the first axis at an intersection (for example, in a right angle or a non-right angle) are determined. The area arrangements of the first areas and the second areas which the step 903 is based on may be that described in connection with the determining unit 101 in the above.

Then at step 907, a gradient intensity and a gradient orientation are calculated based on the first difference and the second difference as calculated to form a feature to be extracted. It is possible to calculate the gradient orientation and the gradient intensity according to equations (1) (or (1')) and (2).

At step 909 then, it is determined whether there is any feature not extracted for the present input image. If there is a feature not extracted, the process returns to step 903 to extract the next feature; if otherwise, the process proceeds to step 911.

All the features extracted for the input image form one feature vector. At step 911, the input image is classified according to the extracted feature vector. The classifier adopted by the step 911 may be that generated in the above embodiments, for example, the classifier generated by adopting the histogram of oriented gradients, or the classifier generate based on the gradient orientation intervals.

The method 900 ends at step 913.

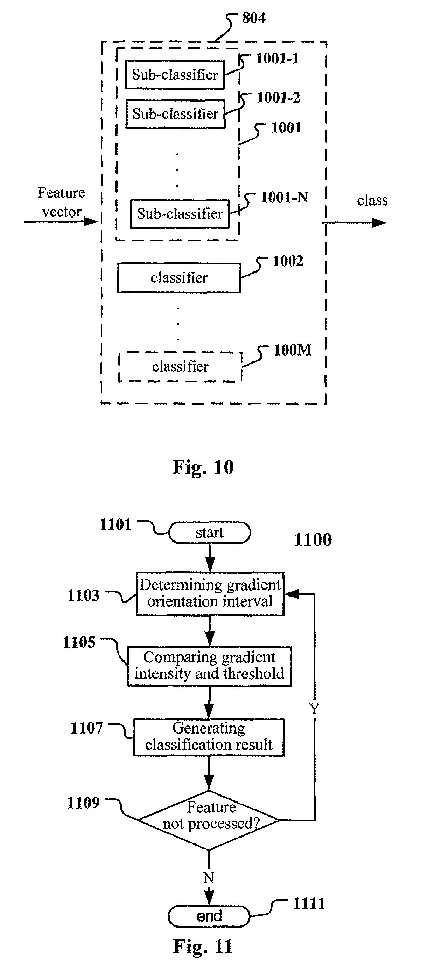

Fig. 10 is a block diagram illustrating a structure of the classifying unit 104 according to a preferable embodiment of the present invention.

As illustrated in Fig. 10, the classifying unit 104 includes classifiers 1001 to 100M, where M represents the number of features in the feature vector to be extracted. Each classifier corresponds to one feature. Classifiers 1001 to 100M may be that described with reference to Fig. 6 in the above. Taking the classifier 1001 as an example, the classifier 1001 includes a plurality of sub-classifiers 1001 - 1 to 1001 - N. As described with reference to Fig. 6 in the above, each sub-classifier 1001 - 1 to 1001 - N corresponds to one different gradient orientation interval, and each gradient orientation interval has a corresponding threshold.

For each feature in the extracted feature vector, in the corresponding classifier (for example classifier 1001), in case that the gradient orientation of the feature falls within a gradient orientation interval corresponding to a sub-classifier (for example, one of the sub-classifiers 1001 - 1 to 1001 - N), the sub-classifier compares the gradient intensity of the feature with the threshold corresponding to the gradient orientation interval, and generates a classification result based on the comparison result. The classification result may be a class of the image (object, non-object). Alternatively, the classification result may also include the reliability of the image class.

In a unit not illustrated, it is possible to combine the classification results generated by the classifiers based on the corresponding features in the feature vector to form a final classification result, via a known method. For example, it is possible to adopt the AdaBoost method.

Fig. 11 is a flow chart illustrating a method of classifying according to a preferable embodiment of the present invention. The method may be adopted to implementation the step 911 of Fig. 9.

As illustrated in Fig. 11, the method starts from step 1101. At step 1103, for one feature in the extracted feature vector, one, including the gradient orientation of the feature, of a plurality of gradient orientation intervals (as described with reference to Fig. 6) associated with the feature is determined. As described with reference to Fig. 6, each gradient orientation interval has a corresponding threshold.

At step 1105, the gradient intensity of the feature is compared with the threshold corresponding to the determined gradient orientation interval.

At step 1107, a classification result is generated according to the comparison result. The classification result may be a class of the image (object, non-object). Alternatively, the classification result may also include the reliability of the image class.

At step 1109, it is determined whether there is any feature not processed in the feature vector. If any, the method returns to step 1103 to process the next feature. If no, the method ends at step 1111.

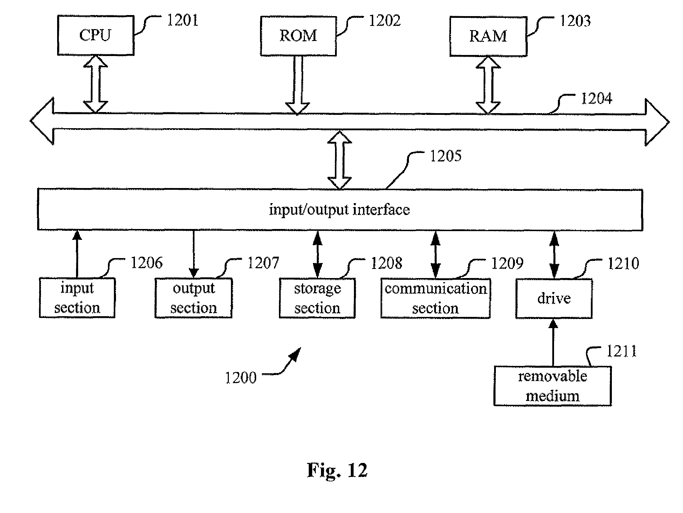

Fig. 12 is a block diagram illustrating the exemplary structure of a computer for implementing the embodiments of the present invention.

An environment for implementing the apparatus and the method of the present invention is as illustrated in Fig. 12.

In Fig. 12, a central processing unit (CPU) 1201 performs various processes in accordance with a program stored in a read only memory (ROM) 1202 or a program loaded from a storage section 1208 to a random access memory (RAM) 1203. In the RAM 1203, data required when the CPU 1201 performs the various processes or the like is also stored as required.

The CPU 1201, the ROM 1202 and the RAM 1203 are connected to one another via a bus 1204. An input / output interface 1205 is also connected to the bus 1204.

The following components are connected to the input / output interface 1205: an input section 1206 including a keyboard, a mouse, or the like; an output section 1207 including a display such as a cathode ray tube (CRT), a liquid crystal display (LCD), or the like, and a loudspeaker or the like; the storage section 1208 including a hard disk or the like; and a communication section 1209 including a network interface card such as a LAN card, a modem, or the like. The communication section 1209 performs a communication process via the network such as the internet.

The driver 1210 is also connected to the input / output interface 1205 as required. A removable medium 1211, such as a magnetic disk, an optical disk, a magneto - optical disk, a semiconductor memory, or the like, is mounted on the drive 1210 as required, so that a computer program read therefrom is installed into the storage section 1008 as required.

In the case where the above - described steps and processes are implemented by the software, the program that constitutes the software is installed from the network such as the internet or the storage medium such as the removable medium 1211.

One skilled in the art should note that, this storage medium is not limit to the removable medium 1211 having the program stored therein as illustrated in Fig. 12, which is delivered separately from the approach for providing the program to the user. Examples of the removable medium 1211 include the magnetic disk, the optical disk (including a compact disk - read only memory (CD-ROM) and a digital versatile disk (DVD)), the magneto - optical disk (including a mini - disk (MD)), and the semiconductor memory. Alternatively, the storage medium may be the ROM 1202, the hard disk contained in the storage section 1208, or the like, which have the program stored therein and is deliver to the user together with the method that containing them.

The present invention is described in the above by referring to specific embodiments. One skilled in the art should understand that various modifications and changes can be made without departing from the scope as set forth in the following claims.

**Claims**

1. A method of classifying an image, comprising:

extracting from the image a set of features as a feature vector, wherein the extracting comprises:

for each of the features in the feature vector, determining a plurality of first areas arranged along a direction of a first axis, and a plurality of second areas arranged along a direction of a second axis intersecting the first axis at an intersection;

calculating a first difference of pixel value sums or mean values of the plurality of first areas, and a second difference of pixel value sums or mean values of the plurality of second areas; and

calculating a gradient intensity and a gradient orientation based on the first difference and the second difference to form the each of the features; and

classifying the image according to the extracted feature vector.

2. The method according to claim 1, wherein the areas are rectangular, the first areas are adj oined, and the second areas are adj oined.

3. The method according to claim 1, wherein
in case that the numbers of the first areas and of the second areas are two, the first areas are adjoined and the second areas are adjoined, the intersection of the first axis and the second axis locates in a connecting line for adjoining the first areas or within a predetermined range from a connecting point for adj oining the first areas, and locates in a connecting line for adj oining the second areas or within a predetermined range from a connecting point for adj oining the second areas;
in case that the numbers of the first areas and of the second areas are two, the first areas are separated apart and the second areas are separated apart, the intersection of the first axis and the second axis locates within a predetermined range from the middle point between respective center positions of the first areas, and locates within a predetermined range from the middle point between respective center positions of the second areas;
in case that the numbers of the first areas and of the second areas are three, the intersection of the first axis and the second axis locates respectively in the intermediate one of the first areas and in the intermediate one of the second areas.

4. The method according to claim 1, wherein a difference between the area arrangements on which at least two of the features are based comprises one or more of the followings: relative positional relation of the areas, shape of the areas, size of the areas and aspect ratio of the areas.

5. The method according to claim 1, wherein the classifying of the image comprises:

for each of the features, determining one, including the gradient orientation of the feature, of a plurality of gradient orientation intervals associated with the feature, wherein each of the gradient orientation intervals has a corresponding threshold;

comparing the gradient intensity of the feature with the corresponding threshold of the determined gradient orientation interval; and

generating a classification result according to the comparison result.

6. The method according to claim 5, wherein the number of the plurality of gradient orientation intervals ranges from 3 to 15.

7. The method according to claim 5, wherein a range covered by the plurality of gradient orientation intervals is 180 degrees or 360 degrees.

8. An apparatus for classifying an image, wherein the apparatus extracts a set of features from the image as a feature vector, and the apparatus comprises:

a determining unit which, for each of the features in the feature vector, determines a plurality of first areas arranged along a direction of a first axis, and a plurality of second areas arranged along a direction of a second axis intersecting the first axis at an intersection;

a difference calculating unit which calculates a first difference of pixel value sums or mean values of the plurality of first areas, and a second difference of pixel value sums or mean values of the plurality of second areas; and a gradient calculating unit which calculates a gradient intensity and a gradient orientation based on the first difference and the second difference to form the each of the features; and

a classifying unit which classifies the image according to the extracted feature vector.

9. The apparatus according to claim 8, wherein the areas are rectangular, the first areas are adj oined, and the second areas are adj oined.

10. The apparatus according to claim 8, wherein

in case that the numbers of the first areas and of the second areas are two, the first areas are adj oined and the second areas are adj oined, the intersection of the first axis and the second axis locates in a connecting line for adjoining the first areas or within a predetermined range from a connecting point for adj oining the first areas, and locates in a connecting line for adj oining the second areas or within a predetermined range from a connecting point for adj oining the second areas;

in case that the numbers of the first areas and of the second areas are two, the first areas are separated apart and the second areas are separated apart, the intersection of the first axis and the second axis locates within a predetermined range from the middle point between respective center positions of the first areas, and locates within a predetermined range from the middle point between respective center positions of the second areas;

in case that the numbers of the first areas and of the second areas are three, the intersection of the first axis and the second axis locates respectively in the intermediate one of the first areas and in the intermediate one of the second areas.

11. The apparatus according to claim 8, wherein the difference between the area arrangements on which at least two of the features are based comprises one or more of the followings: relative positional relation of the areas, shape of the areas, size of the areas and aspect ratio of the areas.

12. The apparatus according to claim 8, wherein for each of the features, the classifying unit comprises a corresponding classifier, and the classifier comprises:

a plurality of sub-classifiers, each of which corresponds to a different gradient orientation interval, wherein each of the gradient orientation intervals has a corresponding threshold,

wherein each of the sub-classifiers is configured to, in case that the gradient orientation of the feature is included within the corresponding gradient orientation interval of the sub-classifier, compare the gradient intensity of the feature with the corresponding threshold of the gradient orientation interval, and generate a classification result according to the comparison result.

13. The apparatus according to claim 12, wherein the number of all the gradient orientation intervals ranges from 3 to 15.

14. The apparatus according to claim 12, wherein a range covered by all the gradient orientation intervals is 180 degrees or 360 degrees.

**Fig. 1**

Image width direction

Image height direction

201  202

Y

X

**Fig. 2a**

Image width direction

Image height direction

203  204

Y

X

**Fig. 2b**

Image width direction

Image height direction

205  206

Y

X

**Fig. 2c**

Image width direction

Image height direction

208

207

Y

X

**Fig. 2d**

Image width direction

Image height direction

209  211

Y

X

210

**Fig. 2e**

Image width direction

Image height direction

214

Y

213  X

212

**Fig. 2f**

Image width direction

Image height direction

Y  X

216

215

**Fig. 2g**

Image width direction

Image height direction

Y  X

218

217

**Fig. 2h**

301  302

303

**Fig. 3a**

304

**Fig. 3b**

305

**Fig. 3c**

401

**Fig. 4a**

403

402

**Fig. 4b**

501 — start

500

503 — Determining first and second areas

505 — Calculating first and second difference

Y

507 — Calculating intensity and orientation

Feature extracting

Y

509 — Feature not extracted?

N

511 — Image with no feature extracted?

N

513 — training

515 — end

**Fig. 5**

104

601

602

Feature
vector

Transforming
unit

classifier
generating
unit

classifier

**Fig. 6**

701 — start

700

703 — Feature
transforming

705 — Generating
classifier

707 — Dimension
not processed?

Y

N

709 — end

**Fig. 7**

⌐ 800

⌐ 801

determining
unit

⌐ 804

Classifying
unit

class

Extracted
features

⌐ 802

image

difference
calculating unit

⌐ 803

gradient
calculating unit

**Fig. 8**

901 ⌐ start

900

903 ⌐ Determining
first and second
areas

905 ⌐ Calculating first
and second
difference

Feature
extracting

907 ⌐ Calculating
intensity and
orientation

Y

909 ⌐ Feature not
extracted?

N

911 ⌐ classifying

913 ⌐ end

**Fig. 9**

804

Sub-classifier — 1001-1

Sub-classifier — 1001-2

1001

Feature vector →

Sub-classifier — 1001-N

→ class

classifier — 1002

classifier — 100M

**Fig. 10**

1101 — ( start )   **1100**

1103 — Determining gradient orientation interval

1105 — Comparing gradient intensity and threshold

1107 — Generating classification result

1109 — Feature not processed?   Y

N

( end ) — 1111

**Fig. 11**

CPU ⌐ 1201

ROM ⌐ 1202

RAM ⌐ 1203

⌐ 1204

⌐ 1205

input/output interface

input section ⌐ 1206

output section ⌐ 1207

storage section ⌐ 1208

communication section ⌐ 1209

drive ⌐ 1210

1200

removable medium ⌐ 1211

**Fig. 12**

# INTERNATIONAL SEARCH REPORT

International application No.

PCT/CN2010/072867

**A. CLASSIFICATION OF SUBJECT MATTER**

G06K 9/00 (2006.01) i

According to International Patent Classification (IPC) or to both national classification and IPC

**B. FIELDS SEARCHED**

Minimum documentation searched (classification system followed by classification symbols)

IPC: G06K, G06T

Documentation searched other than minimum documentation to the extent that such documents are included in the fields searched

Electronic data base consulted during the international search (name of data base and, where practicable, search terms used)

**DWPI; CPRSABS; CNKI:**

Classif+, image, picture, character+, feature, vector, difference, subtract+, pixel, axis, axes

**C. DOCUMENTS CONSIDERED TO BE RELEVANT**

| Category* | Citation of document, with indication, where appropriate, of the relevant passages | Relevant to claim No. |
|---|---|---|
| A | Robust Real-time Object Detection, Paul Viola, Michael Jones, Second International Workshop On Statistical And Computational Theories Of Vision-Modeling, Learning, Computing, and Sampling, Vancouver, Canada, 13 Jul. 2001 (13.07.2001)   See the whole document | 1-14 |
| A | Histogram of Oriented Gradients for Human Detection, Navneet Dalal and Bill Triggs, Proceeding of the 2005 IEEE Computer Society Conference on Computer Vision and Pattern Recognition (CVPR'05), 31 Dec. 2005 (31.12.2005) See the whole document | 1-14 |
| A | WO2008151470A1 (UNIV QINGHUA) 18 Dec. 2008 (18.12.2008) See the whole document | 1-14 |
| A | US5291563A (NIPPON TELEGRAPH & TELEPHONE CORP) 01 Mar. 1994 (01.03.1994) See the whole document | 1-14 |

☐ Further documents are listed in the continuation of Box C.          ☒ See patent family annex.

| | | |
|---|---|---|
| \* Special categories of cited documents:<br><br>"A" document defining the general state of the art which is not considered to be of particular relevance<br><br>"E" earlier application or patent but published on or after the international filing date<br><br>"L" document which may throw doubts on priority claim (S) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family | |
| Date of the actual completion of the international search<br><br>16 Aug. 2010 (16.08.2010) | Date of mailing of the international search report<br><br>**02 Sep. 2010 (02.09.2010)** | |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>**WEN,Rui**<br><br>Telephone No. (86-10)6241 2083 | |

Form PCT/ISA /210 (second sheet) (July 2009)

## INTERNATIONAL SEARCH REPORT
Information on patent family members

| | International application No. |
|---|---|
| | PCT/CN2010/072867 |

| Patent Documents referred in the Report | Publication Date | Patent Family | Publication Date |
|---|---|---|---|
| WO2008151470A1 | 18.12.2008 | None | |
| US5291563A | 01.03.1994 | JP2983080B2 | 29.11.1999 |

Form PCT/ISA /210 (patent family annex) (July 2009)

REFERENCES CITED IN THE DESCRIPTION

**Patent documents cited in the description**

- WO 2008151470 A, Ding

**Non-patent literature cited in the description**

- **Paul Viola ; Michael Jones.** Robust Real-time Object Detection. *Second International Workshop On Statistical And Computational Theories Of Vision-Modeling, Learning, Computing, And Sampling,* 13 July 2001
- **Dalal et al.** Histograms of Oriented Gradients for Human Detection. *Proc. of IEEE Computer Society Conference on Computer Vision and Pattern Recognition,* 2005, 886-893
- **Triggs et al.** Human Detection Using Oriented Histograms of Flow and Appearance. *Proc. European Conference on Computer Vision,* 2006
- **Paul Viola ; Michael Jones.** Robust Real - time Object Detection. *Second International Workshop On Statistical And Computational Theories Of Vision - Modeling, Learning, Computing, And Sampling,* 13 July 2001